# EUROPEAN PATENT SPECIFICATION

(11) **EP 3 211 380 B1**
(45) Date of publication and mention of the grant of the patent: **15.07.2020**
(21) Application number: 17155510.5
(22) Date of filing: 09.02.2017
(51) Int. Cl.: G01D 5/14

(54) **ROTATION DETECTION DEVICE**
ROTATIONSERKENNUNGSVORRICHTUNG
DISPOSITIF DE DÉTECTION DE ROTATION

(30) Priority: 10.02.2016 JP 2016023505
(43) Date of publication of application: 30.08.2017
(73) Proprietor: Melexis Technologies SA, 2022 Bevaix (CH)
(72) Inventor: YOSHIYA, Takumi, Shibuya-ku, 151-0053 Tokyo (JP)
(74) Representative: DenK iP

(56) References cited:
- US-A- 5 488 294
- US-A1- 2006 009 941
- US-A1- 2010 231 202

## Description

### Field of the invention

The present invention relates to a rotation detection device.

### Background of the invention

As a conventional technology, a rotation detection device that detects a rotation of a gear by measuring a variation in a magnetic field angle has been proposed (see for example JP 2011-141132 A).

The rotation detection device disclosed in JP 2011-141132 A includes a magnet that forms a magnetic field toward a tooth surface of the gear and a magnetic sensor that is provided between the gear and the magnet to detect a variation in a magnetic field angle according to the rotation of the gear. With the rotation of the gear, a signal which is output from the magnetic sensor is periodically changed, whereby the rotating speed, angular speed, and the like of the gear can be detected. In addition, due to the detection of the variation in the magnetic field angle, the occurrence of false detection of a rotation state can be prevented, even if an air gap between the tooth surface of the gear and the magnetic sensor is periodically changed by vibration or the like.

The rotation detection device disclosed in JP 2011-141132 A detects, by the magnetic sensor, a variation in a magnetic field angle, but disadvantageously not a variation in a magnetic density. Therefore, this device prevents an occurrence of false detection of a rotation state of the gear even if an air gap is periodically changed, but cannot be applied for the case of using a magnetic sensor that detects a magnetic flux density, and therefore, entails a problem such that the occurrence of false detection cannot be prevented when an air gap between the tooth surface of the gear and the magnetic sensor is periodically changed due to vibration or the like.

US5488294 discloses a magnetic sensor provided with a carrier that has a cavity shaped to receive a magnet in sliding association therein. Means, such as ribs and flexible walls, are provided to retain the magnet in a particular position for accurate calibration.

US2006/0009941 discloses a device for evaluating a sensor signal. The device includes a provider for providing the sensor signal, a processor for processing the sensor signal an for providing an information signal comprising information regarding the amplitude course of the sensor signal and means for comparing the sensor signal to a first and a second comparison value, wherein the first and/or the second comparison value are adjustable based on the information signal such that a difference between the first and the second comparison value comprises a non-linear relation to the amplitude course of the sensor signal.

### Summary of the invention

In view of the above-cited problem, an object of the present invention is to provide a rotation detection device that detects a rotation of a gear while preventing an occurrence of false detection of a rotation state, even when a magnetic sensor that detects a magnetic flux density is used and an air gap between a tooth surface of the gear and the magnetic sensor is periodically changed due to vibration or the like.

In order to attain the foregoing object, one aspect of the present invention provides a rotation detection device described below.

In a first aspect, the present invention provides a rotation detection device comprising a magnet that forms a magnetic field toward a tooth surface of a gear; and a sensor disposed between the magnet and the gear, the sensor having a sensor center, and the magnetic field formed by the magnet being symmetric with respect to the sensor center. The sensor includes at least a pair of magnetic detection elements that outputs signals according to a magnetic flux density in a circumferential direction of the gear; and a signal processor that sets a first threshold on the basis of signals output from the magnetic detection elements in the case in which the distance between the tooth surface of the gear and the magnetic detection elements is set as infinite, and outputs a signal according to a rotation of the gear on the basis of signals output from the magnetic detection elements according to a variation in a magnetic flux density caused by the rotation of the gear and the first threshold, such that the outputted signal is set to a first value when the detected magnetic flux density exceeds the first threshold.

It is an advantage of embodiments of the first aspect of the present invention that the rotation of the gear can be detected, while preventing an occurrence of false detection of a rotation state, even when a magnetic sensor that detects a magnetic flux density is used and an air gap between a tooth surface of the gear and the magnetic sensor is periodically changed due to vibration or the like.

In a rotation detection device according to embodiments of the first aspect of the present invention, the signal processor in the sensor may set the first threshold and a second threshold that is different from, e.g. larger or smaller than, the first threshold by a predetermined amount, and outputs a signal according to the rotation of the gear on the basis of signals output from the magnetic detection elements according to a variation in the magnetic flux density caused by the rotation of the gear and the first and second thresholds. In such embodiments, it is advantageous that a signal according to the rotation of the gear can be output on the basis of the first threshold and the second threshold.

Particular and preferred aspects of the invention are set out in the accompanying independent and dependent claims. Features from the dependent claim may be combined with features of the independent claim.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief Description of Drawings

The invention will now be described further, by way of example, with reference to the accompanying drawings, in which:
Fig. 1 is a side view illustrating an example of a configuration of a rotation detection device according to an embodiment of the present invention.
Figs. 2(a) and 2(b) are a perspective view and a sectional view, respectively, illustrating the configuration of a magnetic sensor according to embodiments of the present invention.
Fig. 3 is a schematic diagram for describing an operation of the magnetic sensor in the rotation detection device, as may be used in embodiments of the present invention.
Fig. 4 is a schematic diagram illustrating a state of a magnetic field formed by a magnet.
Fig. 5 is a schematic diagram for describing an arrangement of the magnetic sensor and the magnet in accordance with embodiments of the present invention.
Fig. 6 is a block diagram illustrating one example of the configuration of the magnetic sensor according to embodiments of the present invention.
Fig. 7 is a block diagram illustrating a connection method between the magnetic sensor and a PC when the magnetic sensor is subjected to calibration.
Figs. 8(a) to 8(c) are graphs illustrating an example of a variation in a signal output from the magnetic sensor as teeth of the gear pass.
Fig. 9 is a schematic diagram illustrating a configuration of a screen displayed on a display unit of the PC during the calibration.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

### Configuration of a rotation detection device according to embodiments of the present invention

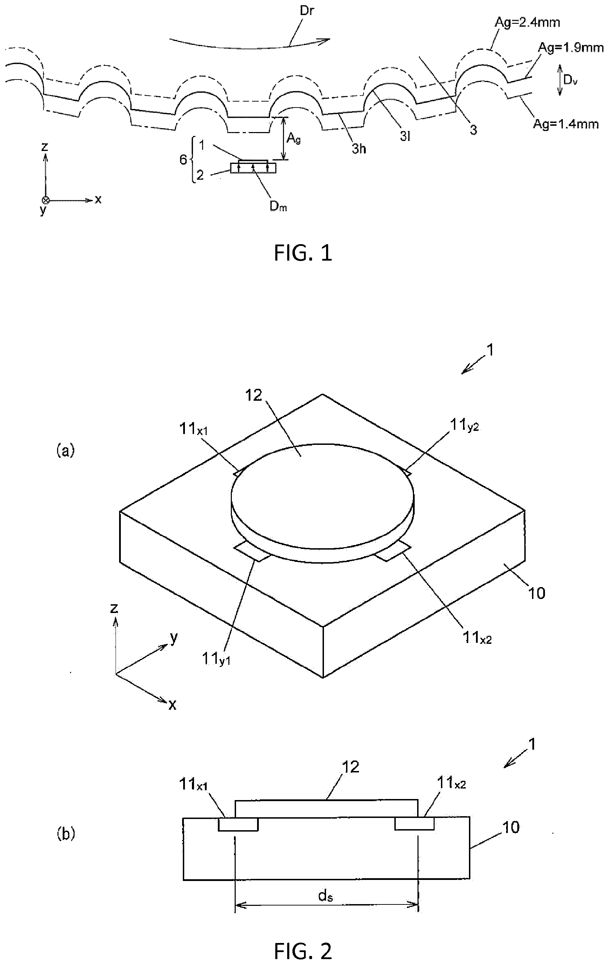

Fig. 1 is a side view illustrating an example of the configuration of a rotation detection device according to an embodiment of the present invention. Figs. 2(a) and 2(b) are a perspective view and a sectional view, respectively, illustrating the configuration of a magnetic sensor 1.

The rotation detection device 6 includes the magnetic sensor 1 disposed with a gap A_{g} from a tooth tip 3h of a gear 3 and a magnet 2 disposed on the back surface of the magnetic sensor 1 with the magnetization direction being defined as Dₘ. Notably, a solid line indicates the gear 3 disposed with a designed air gap (e.g. A_{g} = 1.9 mm), while a broken line (e.g. A_{g} = 2.4 mm) and a one-dot chain line (e.g. A_{g} = 1.4 mm) indicate the gear 3 with air gaps A_{g} being varied due to vibration of the gear 3.

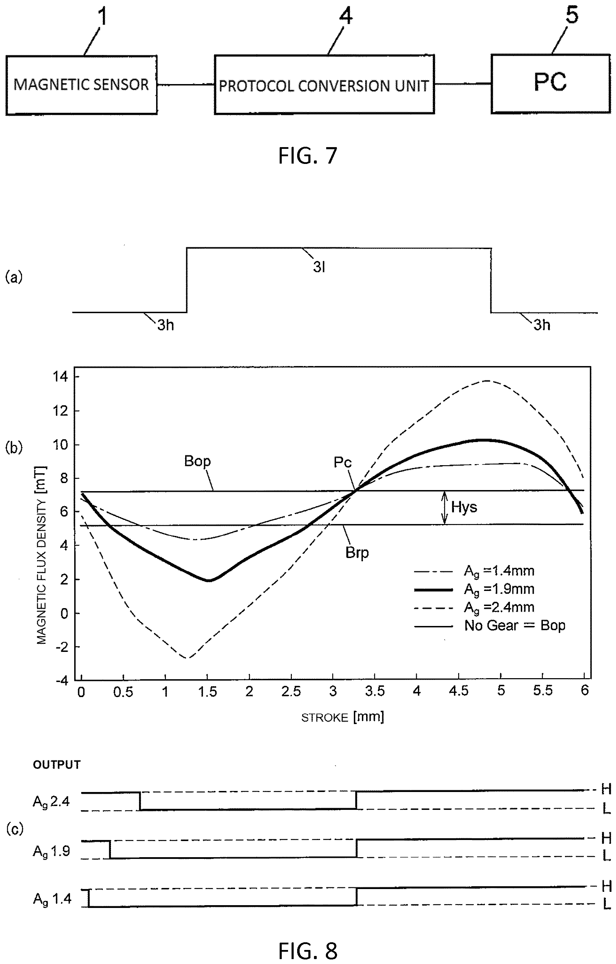

As illustrated in Figs. 2(a) and 2(b), the magnetic sensor 1 includes: a flat plate substrate 10 having a thickness in a z direction; Hall elements 11ₓ₁, 11ₓ₂, 11_{y1}, and 11_{y2} mounted on the substrate 10, having detection surfaces parallel to an xy plane, and having detection directions in the z direction as magnetic detection elements; a magnetic concentrator 12 that is mounted on the Hall elements 11ₓ₁, 11ₓ₂, 11_{y1}, and 11_{y2} such that a portion thereof is overlapped with the Hall elements and converts a magnetic flux in an x direction and a y direction into a magnetic flux in the z direction for causing the Hall elements 11ₓ₁, 11ₓ₂, 11_{y1}, and 11_{y2} to detect this magnetic flux; and a signal processor (DSP 14, Fig. 7) that processes signals output from the Hall elements 11ₓ₁, 11ₓ₂, 11_{y1}, and 11_{y2}, for example, and this magnetic sensor 1 is a Hall IC that detects magnetic flux densities in the x, y, and z directions.

The magnetic sensor 1, which is a Hall latch switch sensor manufactured by Melexis, or the like, obtains the difference between the output from Hall element 11ₓ₁ and the output from the Hall element 11ₓ₂ and the difference between the output from the Hall element 11_{y1} and the output from the Hall element 11_{y2}, thereby being capable of obtaining outputs in proportion to the magnetic flux density in the x direction and the magnetic flux density in the y direction. The relationship between the magnetic flux density and the output will be described later. In addition, the space between the Hall elements 11ₓ₁ and 11ₓ₂ and the space between the Hall elements 11_{y1} and 11_{y2} are set as ds = 0.2 mm, and in a package mold section, the thickness in the z direction is 1.5 mm, the width in the x direction is 4.1 mm, and the height in the y direction is 3 mm. Permalloy can be used for the magnetic concentrator 12 of the magnetic sensor 1. Furthermore, the magnetic sensor 1 may not include Hall elements 11_{y1} and 11_{y2}.

Notably, other types of elements such as an MR element may be used for the magnetic sensor 1, so long as they have the detection direction in the x direction, and a multi-axis magnetic detection IC having magnetic detection elements in a plurality of axial directions may be used, so long as it includes the detection direction in the x direction.

The magnet 2 is a permanent magnet formed by using a material such as ferrite, samarium-cobalt, or neodymium.

It is supposed that the gear 3 vibrates in a Dᵥ direction when being rotated, and the gap A_{g} between the magnetic sensor 1 and the gear 3 varies with the vibration. It is to be noted that various sizes of gears 3 can be used. Herein, the case of using the gear 3 in which the diameter of the addendum circle is 200 mm, the diameter of the dedendum circle is 190 mm, and the number of teeth is 40 will be described below.

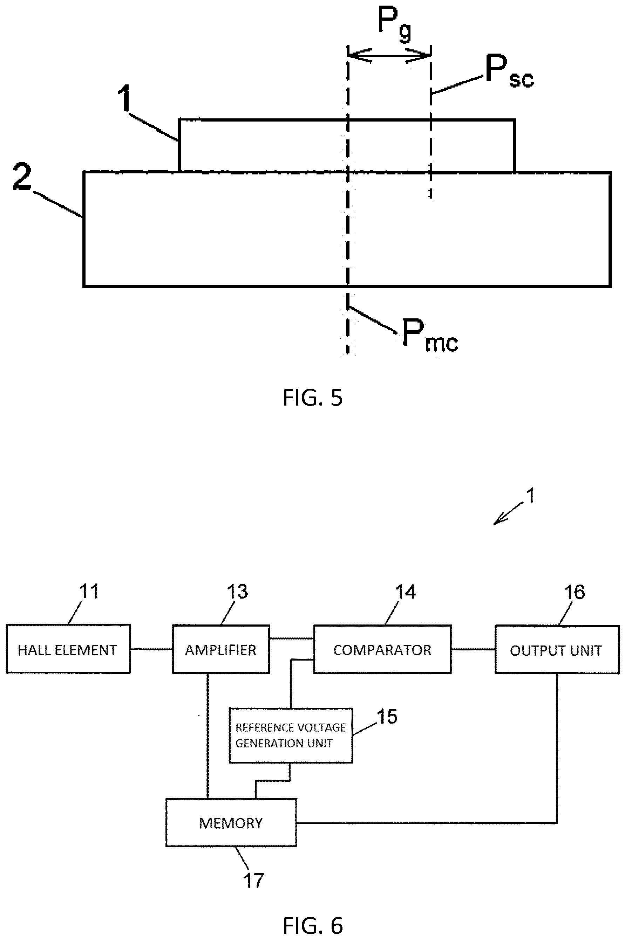

Fig. 5 is a schematic diagram for describing an arrangement of the magnetic sensor 1 and the magnet 2.

The magnetic sensor 1 has a detection center P_{sc} on a position shifted from the center of the outer shape for mounting components other than the Hall elements 11, such as a capacitor. When a magnet center P_{mc} which is the center of the magnet 2 on the outer shape and the center of the sensor on the outer shape are aligned with each other, the shift between the sensor detection center P_{sc} and the magnet center P_{mc} is defined as P_{g}. The shift P_{g} is 0.5 mm, for example.

Fig. 6 is a block diagram illustrating one example of the configuration of the magnetic sensor 1.

The magnetic sensor 1 includes the Hall element 11, an amplifier 13 that amplifies the Hall voltage of the Hall element 11, a comparator 14 that compares the Hall voltage which has been amplified by the amplifier 13 and a reference voltage and outputs High if the Hall voltage is higher than the reference voltage while outputs Low if it is lower, a reference voltage generation unit 15 that generates a reference voltage, an output unit 16 that outputs the result of the comparison and calculation, and a memory 17 that stores information of various set values used for signal processing.

Fig. 7 is a block diagram illustrating a connection method between the magnetic sensor 1 and a PC when the magnetic sensor 1 is subjected to calibration.

The magnetic sensor 1 is connected to the PC (personal computer) 5 through a protocol conversion unit 4. The PC 5 receives an output signal from the output unit 16 and information in the memory 17, and transmits a signal to update the content of the memory 17.

### Operation of a rotation detection device according to embodiments of the present invention

Next, the operation in the first embodiment will be described with reference to FIGS. 1 to 9. Firstly, a basic operation of the rotation detection device 6 for detecting the rotation of the gear 3 will be described. It is to be noted that the air gap A_{g} is as designed (A_{g} = 1.9 mm) to avoid complicated description of the rotation detection operation. Later, the case in which the air gap is varied (A_{g} = 1.4 mm, A_{g} = 2.4 mm) will be described.

### Rotation detection operation

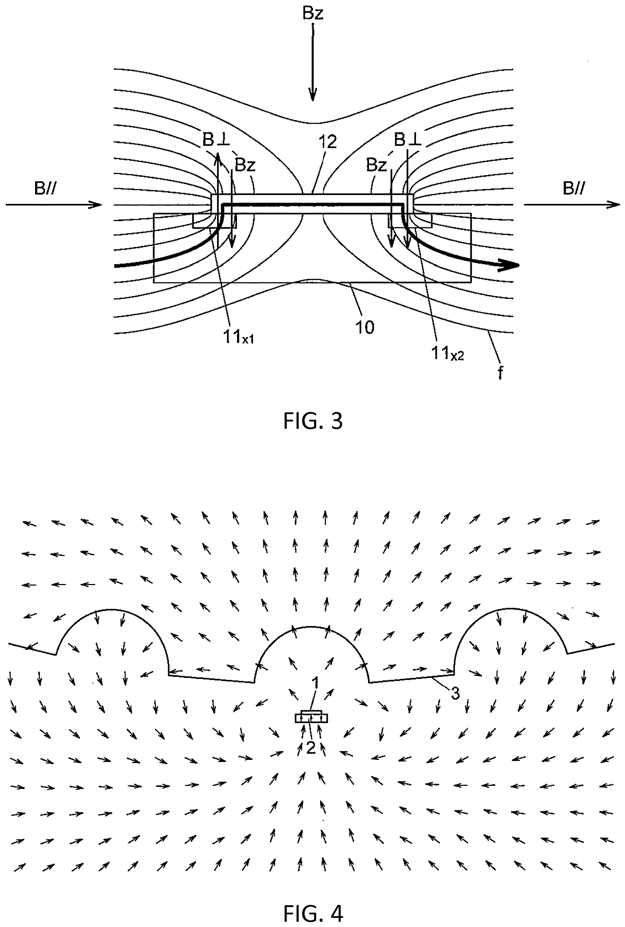

Fig. 3 is a schematic diagram for describing an operation of the magnetic sensor 1 in the rotation detection device 6.

The magnetic flux passing through the magnetic sensor 1 is sensed by the Hall elements 11ₓ₁, 11ₓ₂, 11_{y1}, and 11_{y2}, and a signal proportional to the magnetic flux is output. Hereinafter, the magnetic flux in the x direction, that is, the magnetic flux detected by the Hall elements 11ₓ₁ and 11ₓ₂, will be described as one representative example. However, the same is applied to the y direction.

In a magnetic flux f, a parallel component B// is induced to the magnetic concentrator 12, so that the magnitude of the magnetic flux density is converted into a vertical component B⊥ which is proportional to the parallel component B//, and is measured by a pair of Hall elements 11ₓ₁ and 11ₓ₂. A vertical component B_{z} is also measured by a pair of Hall elements 11ₓ₁ and 11ₓ₂.

Specifically, the Hall element 11ₓ₁ on the left side in the drawing measures "B⊥-B_{z}", while the Hall element 11ₓ₂ on the right side in the drawing measures "-B⊥- B_{z}". In the Y direction, the Hall elements 11_{y1} and 11_{y2} similarly perform measurement.

Therefore, if the difference between the output from the Hall element 11ₓ₁ and the output from the Hall element 11ₓ₂ is calculated, 2B1 is obtained, and if the sum of them is calculated, -2Bz is obtained. In the description below, it is supposed that the magnetic sensor 1 outputs the difference (hereinafter referred to as 2Bx⊥) between the output from the Hall element 11ₓ₁ and the output from the Hall element 11ₓ₂ and the difference (hereinafter referred to as 2By⊥) between the output from the Hall element 11_{y1} and the output from the Hall element 11_{y2}, and the rotation of the gear 3 is detected by the Bx⊥ and By⊥.

Fig. 4 is a schematic diagram illustrating a state of a magnetic field formed by the magnet 2. In addition, Figs. 8(a) to 8(c) are graphs for showing a variation in a signal output from the magnetic sensor 1 as the teeth of the gear pass.

As illustrated in Fig. 4, with the state in which the tip of the tooth of the gear 3 is most separated from the magnetic sensor 1, a magnetic field symmetric with respect to the z axis is formed, and the x component of the magnetic flux density detected by the magnetic sensor 1 becomes zero. In addition, with the rotation of the gear 3 in the rotation direction Dᵣ, the tooth on the left side in the drawing approaches, so that the x component is changed to be negative, and thus, the x component of the magnetic flux density detected by the magnetic sensor 1 assumes a negative value. Furthermore, with the state in which the tip of the tooth is the closest to the magnetic sensor 1, a magnetic field symmetric with respect to the z axis is formed, and the x component of the magnetic flux density detected by the magnetic sensor 1 becomes zero.

Furthermore, with the rotation of the gear 3 in the rotation direction Dᵣ, the tooth passes over the magnetic sensor 1 to be away therefrom toward the left side in the drawing, and therefore, the x component is converted into positive from negative at the timing at which the tooth is passing, and is returned to zero as the gear 3 approaches the state in which the tip of the tooth is most separated from the magnetic sensor 1.

Specifically, as illustrated in Figs. 8(a) and 8(b), in the case in which the tooth passes over the magnetic sensor 1 with the rotation of the gear 3 and at the transition timing from the tooth tip 3h to the tooth root 31, the output signal level from the magnetic sensor 1 becomes the minimum (solid line, A_{g} = 1.9 mm). Furthermore, at the transition timing from the tooth root 3I to the tooth tip 3h, the output signal level from the magnetic sensor 1 becomes the maximum.

Therefore, a threshold Bₒₚ (first threshold) and a threshold Bᵣₚ (second threshold) are set on an appropriate value, and it is configured such that, when the magnetic flux density exceeds Bₒₚ, the DSP 14 in the magnetic sensor 1 switches the output signal to a H level, and when the magnetic flux density falls below Bᵣₚ, the DSP 14 switches the output signal to an L level. According to this configuration, an output signal shown in the middle chart in Fig. 8(c) is obtained, and the rotating speed and the angular speed of the gear 3 can be calculated by counting the number of times the output signal is switched from L to H by an unillustrated device connected to the magnetic sensor 1. It is to be noted that the magnetic sensor 1 may calculate the rotating speed or angular speed of the gear 3, and output this information.

In addition, the similar behavior is also detected as for the y component of the magnetic flux density detected by the magnetic sensor 1, whereby the rotating speed and the angular speed of the gear 3 can be calculated.

Next, the case of A_{g} = 1.4 mm and 2.4 mm will be described. Also in the case of A_{g} = 1.4 mm and 2.4 mm, when the tooth passes over the magnetic sensor 1 with the rotation of the gear 3, the output signal level from the magnetic sensor 1 becomes the minimum at the transition timing from the tooth tip 3h to the tooth root 31, and the output signal level from the magnetic sensor 1 becomes the maximum at the transition timing from the tooth root 3I to the tooth tip 3h, as illustrated in Figs. 8(a) and 8(b). This is the phenomenon occurring with some errors, regardless of a numerical value of the air gap A_{g}.

In addition, in the state in which the tip of the tooth is most separated from the magnetic sensor 1, a magnetic field symmetric with respect to the z axis is formed on the magnetic sensor 1, and the timing at which the x component of the magnetic flux density detected by the magnetic sensor 1 becomes zero is the same, even if the air gap is different (coincident point P_{c}, Fig. 8(b)).

On the other hand, in the state in which the tip of the tooth is the closest to the magnetic sensor 1, a magnetic field symmetric with respect to the z axis is formed on the magnetic sensor 1, and the timing at which the x component of the magnetic flux density detected by the magnetic sensor 1 becomes zero is different, when the air gap is different.

Therefore, if the threshold Bₒₚ is determined to pass through the coincident point P_{c}, the timing at which the output signal is switched from L to H becomes the same, regardless of the air gap A_{g}, as illustrated in Fig. 8(c). Accordingly, the rotating speed and the angular speed of the gear 3 can be calculated by counting the number of times the output signal is switched from L to H. On the other hand, the threshold Bₒₚ is an output value of the magnetic sensor 1, when A_{g} is infinite.

It is to be noted that the threshold Bᵣₚ can be appropriately determined to a value which is smaller than the threshold Bₒₚ and does not fall below the minimum value of the magnetic flux density. In addition, the threshold Bᵣₚ is a numerical value set to be adapted to the case in which the gear 3 transversely vibrates in the direction orthogonal to the vibration direction Dᵥ. The reason of this is to keep the current output when the magnetic flux density varies in the hysteresis range which is between the Bₒₚ and the Bᵣₚ.

It is to be noted that the threshold Bᵣₚ may be larger than the threshold Bₒₚ. In addition, the output signals L and H may be inverted.

### Calibration operation

Next, a method (calibration) for setting the above-mentioned threshold Bₒₚ and the threshold Bᵣₚ will be described.

Firstly, a user connects the magnetic sensor 1 to the PC 5 through the protocol conversion unit 4 as illustrated in Fig. 7. It is supposed that an unillustrated application for calibrating the magnetic sensor 1 is installed into the PC 5, and this application displays a screen described below on a display unit of the PC 5.

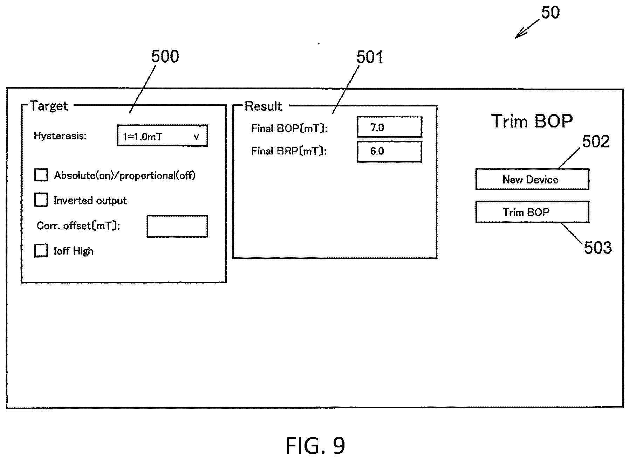

Fig. 9 is a schematic diagram illustrating the configuration of the screen displayed on the display unit of the PC 5 during the calibration.

The screen 50 includes a hysteresis set part 500 for setting a hysteresis which is the difference between Bₒₚ and Bᵣₚ, a threshold result display part 501 that displays the calculated threshold Bₒₚ and threshold Bᵣₚ, a new device button 502 for starting the calibration, and a Bₒₚ trim button 503 for trimming Bₒₚ.

The hysteresis set part 500 has: a selection part for selecting a value of the hysteresis; an "Absolute/Proportional" part that converts a unit of the hysteresis into "mT" if "Absolute" is selected, and converts the unit of the hysteresis into the proportion of Bₒₚ if "Proportional" is selected; an "Inverted Output" part that sets whether the output is changed from H to L or from L to H when the magnetic flux density is varied from Bₒₚ to Bᵣₚ; a "Corr Offset" part for setting an offset; and an "loff High" part for selecting the current value when the output is High from two types, max5 and 6.9 mA, for example.

Next, the user places the magnetic sensor 1 on the position sufficiently apart from the gear 3, and operates the operation unit of the PC 5 by referring to the screen 50 to set the content of the hysteresis set part 500. Then, the user presses the new device button 502 by means of a cursor or the like, not illustrated, and further presses the Bₒₚ trim button.

The PC 5 causes the magnetic sensor 1 to detect the magnetic flux density through the protocol conversion unit 4, and stores the detected magnetic flux density into the memory 17 of the magnetic sensor 1 as Bₒₚ. In addition, the PC 5 stores the numerical values which have been set, such as Hys, into the memory 17.

The magnetic sensor 1 transmits the detected magnetic flux density or the stored Bₒₚ and Bᵣₚ to the PC 5 through the protocol conversion unit 4.

The PC 5 updates the value on "Final Bₒₚ" and "Final Bᵣₚ" on the threshold result display part 501 on the screen 50 on the basis of the information received from the magnetic sensor 1.

### Effect of embodiments of the present invention

According to the embodiment described above, it is configured such that the output value of the magnetic sensor 1 is switched on the coincident point P_{c} by using the nature of the coincident point P_{c} of being determined regardless of the air gap A_{g}, and the rotating speed or the like is calculated at the switching timing. Therefore, even when the air gap between the tooth surface of the gear and the magnetic sensor is periodically varied due to vibration or the like, false detection of the rotation state can be prevented.

In addition, the threshold Bₒₚ is determined from the output value of the magnetic sensor 1 in the case in which the air gap A_{g} is infinite, whereby the calibration for determining the threshold Bₒₚ is simplified.

Furthermore, since the threshold Bₒₚ is determined from the output value of the magnetic sensor 1 in the case in which the air gap A_{g} is infinite, the influence due to the shift P_{g}, illustrated in Fig. 5, between the sensor detection center P_{sc} and the magnet center P_{mc} can be absorbed. The reason of this is as follows. Specifically, due to the shift P_{g}, the magnetic flux detected in the x direction does not become zero but becomes Bₒₚ, even when the air gap A_{g} is infinite. However, it is configured such that the output value of the magnetic sensor 1 is switched by using the Bₒₚ as the threshold. Therefore, the shift P_{g} will not be a problem.

## Claims

1. A rotation detection device (6) comprising: a magnet (2) that forms a magnetic field toward a tooth surface of a gear (3); and a sensor (1) disposed between the magnet (2) and the gear (3), the sensor (1) having a sensor center, and the magnetic field formed by the magnet (2) being symmetric with respect to the sensor center,
wherein the sensor (1) includes: at least a pair of magnetic detection elements (11x1, 11x2; 11y1, 11y2) that outputs signals according to a magnetic flux density in a circumferential direction of the gear (3); and a signal processor that sets a first threshold (Bop) on the basis of signals output from the magnetic detection elements (11x1, 11x2; 11y1, 11y2) in the case in which the distance between the tooth surface of the gear (3) and the magnetic detection elements (11x1, 11x2; 11y1, 11y2) is set as infinite, and outputs a signal according to a rotation of the gear on the basis of signals output from the magnetic detection elements (11x1, 11x2; 11y1, 11y2) according to a variation in a magnetic flux density caused by the rotation of the gear (3) and the first threshold, such that the outputted signal is set to a first value when the detected magnetic flux density exceeds the first threshold.

2. The rotation detection device (6) according to claim 1, wherein the signal processor in the sensor (1) sets the first threshold (Bop) and a second threshold (Brp) that is larger or smaller than the first threshold (Bop) by a predetermined amount, and outputs a signal according to the rotation of the gear (3) on the basis of signals output from the magnetic detection elements according to a variation in the magnetic flux density caused by the rotation of the gear (3) and the first and second thresholds (Bop, Brp), such that the outputted signal is set to a second value when the detected magnetic flux density falls below the second threshold.

## Patentansprüche

1. Rotationdetektionsvorrichtung (6), umfassend: einen Magneten (2), der ein Magnetfeld in Richtung einer Zahnoberfläche eines Zahnrads (3) bildet; und einen zwischen dem Magneten (2) und dem Zahnrad (3) angeordneten Sensor (1), wobei der Sensor (1) einen Sensormittelpunkt aufweist und das durch den Magneten (2) gebildete Magnetfeld bezüglich des Sensormittelpunkts symmetrisch ist,
wobei der Sensor (1) beinhaltet: mindestens ein Paar magnetischer Detektionselemente (11x1, 11x2; 11y1, 11y2), das Signale gemäß einer magnetischen Flussdichte in einer Umlaufrichtung des Zahnrads (3) ausgibt; und einen Signalprozessor, der einen ersten Schwellenwert (Bop) auf der Grundlage von Signalen einstellt, die von den magnetischen Detektionselementen (11x1, 11x2; 11y1, 11y2) in dem Fall ausgegeben werden, in dem der Abstand zwischen der Zahnoberfläche des Zahnrads (3) und der magnetischen Detektionselemente (11x1, 11x2; 11y1, 11y2) als unendlich eingestellt ist, und ein Signal gemäß einer Rotation des Zahnrads auf der Grundlage von Signalen ausgibt, die von den magnetischen Detektionselementen (11x1, 11x2; 11y1, 11y2) gemäß einer Variation in einer magnetischen Flussdichte, die durch die Rotation des Zahnrads (3) verursacht wird, und dem ersten Schwellenwert ausgegeben werden, sodass das ausgegebene Signal auf einen ersten Wert eingestellt wird, wenn die detektierte magnetische Flussdichte den ersten Schwellenwert überschreitet.

2. Rotationdetektionsvorrichtung (6) nach Anspruch 1, wobei der Signalprozessor in dem Sensor (1) den ersten Schwellenwert (Bop) und einen zweiten Schwellenwert (Brp) einstellt, der um einen vorher festgelegten Betrag größer oder kleiner als der erste Schwellenwert (Bop) ist, und ein Signal gemäß der Rotation des Zahnrads (3) auf der Grundlage von Signalen ausgibt, die von den magnetischen Detektionselementen gemäß einer Variation in der magnetischen Flussdichte, die durch die Rotation des Zahnrads (3) verursacht wird, und dem ersten und zweiten Schwellenwert (Bop, Brp) ausgegeben werden, sodass das ausgegebene Signal auf einen zweiten Wert eingestellt wird, wenn die detektierte magnetische Flussdichte unter den zweiten Schwellenwert fällt.

## Revendications

1. Dispositif de détection de rotation (6) comprenant : un aimant (2) qui forme un champ magnétique vers une surface dentée d'un engrenage (3) ; et un capteur (1) disposé entre l'aimant (2) et l'engrenage (3), le capteur (1) présentant un centre de capteur, et le champ magnétique formé par l'aimant (2) étant symétrique par rapport au centre de capteur,
dans lequel le capteur (1) inclut : au moins une paire d'éléments de détection magnétique (11x1, 11x2 ; 11y1, 11y2) qui produisent des signaux selon une densité de flux magnétique dans une direction circonférentielle de l'engrenage (3) ; et un processeur de signal qui définit un premier seuil (Bop) sur la base de signaux produits par les éléments de détection magnétique (11x1, 11x2 ; 11y1, 11y2) au cas où la distance entre la surface dentée de l'engrenage (3) et les éléments de détection magnétique (11x1, 11x2 ; 11y1, lly2) est définie comme infinie, et produit un signal selon une rotation de l'engrenage sur la base de signaux produits par les éléments de détection magnétique (11x1, 11x2 ; 11y1, 11y2) selon une variation d'une densité de flux magnétique provoquée par la rotation de l'engrenage (3) et le premier seuil, de sorte que le signal produit est défini sur une première valeur lorsque la densité de flux magnétique détectée dépasse le premier seuil.

2. Dispositif de détection de rotation (6) selon la revendication 1, dans lequel le processeur de signal dans le capteur (1) définit le premier seuil (Bop) et un second seuil (Brp) qui est supérieur ou inférieur au premier seuil (Bop) d'une quantité prédéterminée, et produit un signal selon la rotation de l'engrenage (3) sur la base de signaux produits par les éléments de détection magnétique selon une variation de la densité de flux magnétique provoquée par la rotation de l'engrenage (3) et les premier et second seuils (Bop, Brp), de sorte que le signal produit est défini sur une seconde valeur lorsque la densité de flux magnétique détectée tombe sous le second seuil.
